# EUROPEAN PATENT APPLICATION

(11) **EP 4 477 299 A1**
(43) Date of publication of application: **18.12.2024**
(21) Application number: 22925675.5
(22) Date of filing: 08.11.2022
(51) Int. Cl.: B01F 23/23, B01F 23/232, B01F 23/231, B01F 23/70, B01F 25/51, B01F 33/25, C02F 1/68, C02F 1/48, C02F 1/00, C02F 1/46, C02F 1/74, C02F 3/12, C02F 3/20

(54) **PLASMA-ACTIVATED WATER PREPARATION DEVICE**

(30) Priority: 09.02.2022 CN 202210121116
(71) Applicant: Gree Electric Appliances, Inc. of Zhuhai, Zhuhai, Guangdong 519031 (CN)
(72) Inventor: WANG, Mingzhao, Zhuhai, Guangdong 519031 (CN); MA, Mingyu, Zhuhai, Guangdong 519031 (CN); FENG, Zongyu, Zhuhai, Guangdong 519031 (CN); ZHANG, Linfeng, Zhuhai, Guangdong 519031 (CN); WU, Chendi, Zhuhai, Guangdong 519031 (CN); WANG, Shu, Zhuhai, Guangdong 519031 (CN)
(74) Representative: Zacco GmbH
(86) International application number: PCT/CN2022/130622
(87) International publication number: WO 2023/151324

(57) **Abstract**

A plasma-activated water preparation device, including: a water tank (10) provided with an accommodating cavity (11); an electrode assembly (30), assembled on the water tank (10) and extending into the accommodating cavity (11) for discharging to generate plasma; and a gas-liquid mixed mechanism (50), connected to the water tank (10), where a gas and liquid in the water tank (10) circulate back and forth and are mixed with each other between the water tank (10) and the gas-liquid mixed mechanism (50) driven by the gas-liquid mixed mechanism (50).

## Description

### Cross-Reference to Related Application

This application claims priority to Chinese Patent Application No. 202210121116.5, filed on February 9, 2022 and entitled "Plasma-Activated Water Preparation Device", which is incorporated herein by reference in its entirety.

### Technical Field

The present invention relates to a technical field of activated water preparation, and in particular to a plasma-activated water preparation device.

### Background

With the development of plasma technologies, people gradually realized that substances produced by discharge in a gas have a bactericidal effect. In addition, activated water with a low PH value and high redox potential can be obtained by treating plasma under the atmospheric pressure. Plasma activated water can generate a large quantity of active particles in gas and liquid phases, such as H⁺, O₃, -OH, NO-, NO⁻², and the like. These particles produce chemical reactions in water and generate peroxynitrous acid, hydrogen peroxide, nitric acid, nitrous acid, and other substances. These substances have anti-cancer and bactericidal biomedical effects. The plasma-activated water is widely used in cleaning, sterilization, algae wastewater treatment, and fruit and vegetable preservation.

However, in actual preparation, active particles formed per unit time are limited and a yield of the plasma-activated water is low.

### SUMMARY

Based on this, a plasma-activated water preparation device needs to be provided to resolve a problem of low preparation efficiency of plasma-activated water in related technologies.

A plasma-activated water preparation device, including:
a water tank, provided with an accommodating cavity;
an electrode assembly, assembled on the water tank and extending into the accommodating cavity for discharging to generate plasma; and
a gas-liquid mixed mechanism, connected with the water tank,
where a gas and liquid in the water tank circulate back and forth and are mixed with each other between the water tank and the gas-liquid mixed mechanism driven by the gas-liquid mixed mechanism.

In the above plasma-activated water preparation device, the gas-liquid mixed mechanism is configured to drive a gas and liquid in the water tank to circulate back and forth and are mixed with each other between the water tank and the gas-liquid mixed mechanism, that is, the liquid and gas on the circulation path are mixed with each other during each circulation process. The gas and liquid are mixed in the water tank in a plurality of times of circulation, so that plasma in the gas can be fully mixed with water, and the plasma and water can fully react, thereby improving preparation efficiency of plasma-activated water. In addition, the gas in the water tank circulates back and forth between the water tank and the gas-liquid mixed mechanism, to prevent ozone generated during discharging from being directly discharged to the outside to cause pollution, thereby reducing ozone emission.

In one embodiment, the gas-liquid mixed mechanism includes an air supply assembly, the electrode assembly includes a first electrode assembly, the first electrode assembly includes a first substrate and a first electrode, the first substrate has a first discharge cavity, and the first electrode at least partially extends into the first discharge cavity,
where the first substrate at least partially extends into liquid carried in the accommodating cavity, the air supply assembly is configured to supply air to the first discharge cavity and causes a low liquid level to be formed at the bottom of the first substrate, and the first electrode is controlled to produce an electric arc between an end of the first electrode and the low liquid level.

In one embodiment, the first substrate is provided with a first air inlet and a first air outlet both communicated with the first discharge cavity, the air supply assembly is configured to supply air to the first air inlet, and the first electrode generates an electric arc with the low liquid level through the first air outlet.

In one embodiment, the electrode assembly includes a second electrode assembly, the second electrode assembly includes a second substrate and a second electrode, the second substrate has a second discharge cavity, and the second electrode at least partially extends into the second discharge cavity,
where the second electrode is controlled to perform glow discharge in the second discharge cavity.

In one embodiment, the second electrode assembly further includes an aeration stone, a second air inlet and a second air outlet that are both communicated with the second discharge cavity are provided in the second substrate, the air supply assembly is also configured to supply air to the second air inlet, and the aeration stone is mounted at the second air outlet.

In one embodiment, the air supply assembly is connected between a top of the water tank and the electrode assembly, and is configured to suck air from the accommodating cavity and supply the air to the electrode assembly.

In one embodiment, the gas-liquid mixed mechanism includes a liquid circulation assembly and a mixing member, the mixing member is disposed in the accommodating cavity and is spaced apart from a bottom wall and a top wall of the accommodating cavity,
where the mixing member allows a gas and liquid to pass through, and the liquid circulation assembly is connected between a bottom and a top of the water tank and is configured to transport the liquid at the bottom of the accommodating cavity to the top of the accommodating cavity and flow to the mixing member.

In one embodiment, the mixing member includes a multi-surface hollow ball or water curtain paper.

In one embodiment, the liquid circulation assembly further includes a liquid circulation pipe, a first circulation pump, and a first sprayer, the liquid circulation pipe is communicated between the bottom and the top of the accommodating cavity, the first circulation pump is disposed on the liquid circulation pipe, and the first sprayer is connected with the liquid circulation pipe and is located at the top of the accommodating cavity; and
the electrode assembly is located in a spraying range of the first sprayer.

In one embodiment, the gas-liquid mixed mechanism includes a gas-liquid mixed assembly, the gas-liquid mixed assembly includes a first input pipe, a second input pipe, an output pipe, and a hybrid power component member, ends of the first input pipe and the second input pipe are communicated with a top and bottom of the accommodating cavity respectively, the other ends of the first input pipe and the second input pipe are communicated with an input side of the hybrid power component member, and the output pipe is connected between an output side of the hybrid power component member and the top of the accommodating cavity.

In one embodiment, the hybrid power component member is a gas-liquid mixed pump.

In one embodiment, the gas-liquid mixed assembly further includes a second sprayer, and the second sprayer is connected with the output pipe and is located at the top of the accommodating cavity; and
the electrode assembly is located in a spraying range of the second sprayer.

### Brief Description of the Drawings

Fig. 1 illustrates a schematic structural diagram of a plasma-activated water preparation device according to an embodiment of this application; and
Fig. 2 illustrates a schematic structural diagram of the plasma-activated water preparation device according to another embodiment of this application.

Reference numerals:
100. plasma-activated water preparation device; 10. water tank; 11. accommodating cavity; 30. electrode assembly; 32. first electrode assembly; 321. first substrate; 322. first discharge cavity; 323. first air inlet; 324. first air outlet; 325. first electrode; 34. second electrode assembly; 341. second substrate; 342. second discharge cavity; 343. second air inlet; 344. second air outlet; 345. second electrode; 346. aeration stone; 41. high-voltage AC power supply; 43. ground electrode; 50. gas-liquid mixed mechanism; 52. air supply assembly; 521. air supply pipe; 523. air supply pump; 54. liquid circulation assembly; 541. liquid circulation pipe; 543. first circulation pump; 545. first sprayer; 56. mixing member; 58. gas-liquid mixed assembly; 581. first input pipe; 583. second input pipe; 585. output pipe; 587. hybrid power component member; 589. second sprayer.

### Detailed Description of the Embodiments

To make the objectives, features, and advantages of this application more apparent and understandable, the following describes specific implementations of this application in detail with reference to the accompanying drawings. In the following description, specific details are described to thoroughly understand this application. However, this application can be implemented in many other ways different from those described herein. A person skilled in the art can make similar improvements without departing from the connotation of this application. Therefore, this application is not limited to specific embodiments disclosed below.

In the description of this application, it should be understood that an orientation or positional relationship indicated by the term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for ease of describing this application and simplifying the description, but does not indicate or imply that an apparatus or an element referred to must have a specific orientation or be constructed and operated in a specific orientation, and therefore cannot be understood as a limitation on this application.

In addition, the terms "first" and "second" are only used for descriptive purposes, and cannot be understood as indicating or implying relative importance or implicitly indicating a quantity of indicated technical features. Therefore, a feature defined by "first" or "second" may explicitly or implicitly include at least one such feature. In the description of this application, "a plurality of" means at least two, for example, two, three, or the like, unless otherwise specifically defined.

In this application, unless expressly stipulated and defined otherwise, terms "install", "connection", "connect", "fasten" should be understood in a broad sense. For example, "connection" may be a fastened connection, a detachable connection, or an integral connection; may be a mechanical connection, or may be an electrical connection; or may be a direct connection, an indirect connection using an intermediate medium, or a connection between two elements or an interaction between two elements, unless expressly defined. A person of ordinary skill in the art may interpret specific meanings of the foregoing terms in this application according to specific cases.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above", "over", and "on" the second feature may be that the first feature is right above or obliquely above the second feature, or merely mean that a horizontal height of the first feature is higher than a horizontal height of the second feature. That the first feature is "below", "under", or "off" the second feature may be that the first feature is right below or obliquely below the second feature, or merely mean that a horizontal height of the first feature is lower than a horizontal height of the second feature.

It should be noted that when an element is referred to as being "fastened to" or "disposed on" another element, the element may be directly on the other element or there may be an element in the middle. When an element is considered to be "connected" to another element, the element may be directly connected to the other element or there may be an element in the middle. Terms "vertical", "horizontal", "upper", "lower", "left", "right" and similar expressions used herein are for illustrative purposes only and do not represent the only implementation.

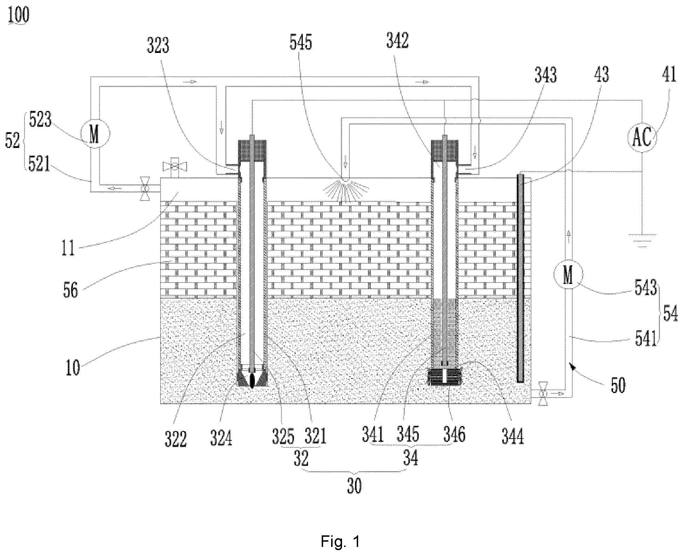

Refer to Fig. 1. In an embodiment of this application, a plasma-activated water preparation device 100 is provided, including a water tank 10 and an electrode assembly 30. The water tank 10 has an accommodating cavity 11. The electrode assembly 30 is assembled on the water tank 10 and extends into the accommodating cavity 11 for discharging to generate plasma, so that the plasma is mixed with water in the water tank 10 to react and generate peroxynitrous acid, hydrogen peroxide, nitric acid, nitrous acid, and other substances with anti-cancer and bactericidal functions, thereby preparing plasma-activated water.

In some embodiments, the plasma-activated water preparation device 100 further includes a gas-liquid mixed mechanism 50 connected with the water tank 10. Driven by the gas-liquid mixed mechanism 50, a gas and liquid in the water tank 10 circulate back and forth between the water tank 10 and the gas-liquid mixed mechanism 50 and are mixed with each other, that is, a gas and liquid on the circulation path are mixed with each other during each circulation process. The gas and liquid are mixed in the water tank 10 in a plurality of times of circulation, so that plasma in the gas can be fully mixed with water, and the plasma and water can fully react, thereby improving preparation efficiency of plasma-activated water. In addition, the gas in the water tank 10 circulates back and forth between the water tank 10 and the gas-liquid mixed mechanism 50, to prevent ozone generated during discharging from being directly discharged to the outside to cause pollution, thereby reducing ozone emission.

In some embodiments, the gas-liquid mixed mechanism 50 includes an air supply assembly 52, and the electrode assembly 30 includes a first electrode assembly 32. The first electrode assembly 32 includes a first substrate 321 and a first electrode 325, the first substrate 321 has a first discharge cavity 322, and the first electrode 325 at least partially extends into the first discharge cavity 322. During a preparation process of the plasma-activated water, the first substrate 321 at least partially extends into liquid carried in the accommodating cavity 11, that is, at least partially extends into water in the accommodating cavity 11, and the air supply assembly 52 is configured to supply air to the first discharge cavity 322, to discharge liquid in the first discharge cavity 322 and prevent water from entering the first discharge cavity 322.

In addition, after the air supply assembly 52 supplies the gas to the first discharge cavity 322, a low liquid level is formed at the bottom of the first substrate 321. The low liquid level is lower than a main liquid level in the water tank 10 and is located at the bottom of the first substrate 321. What's more, the first electrode 325 is controlled to generate an electric arc between an end of the first electrode 325 and the low liquid level, to utilize high voltage discharge of the first electrode 325 in the first discharge cavity 322 to generate an electric arc between an end of the first electrode 325 and the low liquid level. To be specific, an electric arc discharge mode is used in the first electrode assembly 32, which can produce hydrogen peroxide of a higher concentration, thereby effectively improving the sterilization efficiency of the plasma-activated water.

In some embodiments, the first substrate 321 is provided with a first air inlet and a first air outlet both communicated with the first discharge cavity 322. The air supply assembly 52 is configured to supply air to the first air inlet. The first electrode 325 generates an electric arc with the low liquid level through the first air outlet. When the air supply assembly 52 is working, gas flow can be delivered to the first air inlet, and then the gas flow flows through the first discharge cavity 322 and flows out from the first air outlet, and in the process of flowing-out, liquid at the bottom of the first substrate 321 is blown away to form the low liquid level. In addition, the first electrode 325 is communicated with the low liquid level through the first air outlet, and can generate an electric arc between an end thereof and the low liquid level after a high pressure is applied, to form hydrogen peroxide of a high concentration and improve the sterilization efficiency.

In some embodiments, the electrode assembly 30 includes a second electrode assembly 34. The second electrode assembly 34 includes a second substrate and a second electrode 345, the second substrate 341 has a second discharge cavity 342, the second electrode 345 at least partially extends into the second discharge cavity 342 and is controlled to perform glow discharge in the second discharge cavity 342. In this way, plasma is generated in the second discharge cavity 342, and then the plasma can be mixed with water in the water tank 10 to generate a large quantity of active particles for preparing the plasma-activated water. In this way, not only arc discharge is performed through the first electrode assembly 32, but also glow discharge is performed through the second electrode assembly 34, thereby increasing the content of active particles and hydrogen peroxide in the water tank 10 and reducing a pH value, and improving a sterilization rate of the plasma-activated water.

It can be understood that glow discharge means a gas discharge phenomenon in which glow is displayed in the gas, that is, the second electrode 345 ionizes the gas in the second discharge cavity 342 after being energized, so that the gas in the second discharge cavity 342 discharges and displays glow.

In some embodiments, the second electrode assembly 34 further includes an aeration stone 346. The second substrate 341 is provided with a second air inlet and a second air outlet both communicated with the second discharge cavity 342. The air supply assembly 52 is further configured to supply air to the second air inlet. The aeration stone 346 is mounted at the second air outlet. In actual use, water is injected into the water tank 10 and the second substrate 341 at least partially extends into water. The gas is supplied to the second discharge cavity 342 to prevent water from entering the second substrate 341. In addition, the gas is discharged through the aeration stone 346, and the plasma formed in the second discharge cavity 342 forms bubbles after passing through the aeration stone 346 and then dissolves into water in the water tank 10, thereby increasing a contact area between the plasma and water, improving the reaction efficiency of the plasma and water, and improving the preparation efficiency of the activated water.

Specifically, in this embodiment, the plasma-activated water preparation device 100 also includes a high-voltage AC power supply and a ground electrode. A negative electrode of the high-voltage AC power supply is connected with the ground electrode, and a positive electrode of the high-voltage AC power supply is connected with the first electrode 325 and the second electrode 345. The high-voltage AC power supply provides high-voltage AC power to both the first electrode 325 and the second electrode 345, so that the first electrode 325 and the second electrode 345 discharge.

In some embodiments, the air supply assembly 52 is connected between a top of the water tank 10 and the electrode assembly 30, and is configured to suck air from the accommodating cavity 11 and supply the air to the electrode assembly. When the air supply assembly 52 supplies the gas to the electrode assembly 30 to prevent water from entering the electrode assembly 30, the air in the electrode assembly 30 after supplied with the gas is subsequently ionized and flows out of the electrode assembly 30, and finally flows out from water at the bottom of the water tank 10 and gathers at the top of the water tank 10. The air supply assembly 52 is connected between the top of the water tank 10 and the electrode assembly 30, and the air can be supplied to water in the water tank 10 through the electrode assembly 30, and air collected at the top of the water tank 10 can be supplied to water in the water tank 10 again. In this way, air is driven to circulate back and forth from the top of the water tank 10, the air supply assembly 52, the bottom of the water tank 10, to the top of the water tank 10, so that the air can be fully mixed with the liquid at the bottom of the water tank 10, further improving the sufficiency of reaction between the plasma and water in the air. In addition, air that has been ionized once enters water at the bottom of the water tank 10 and then flows to the top of the water tank 10, and is then brought into the electrode assembly 30 by the air supply assembly 52 to be ionized again, so that some plasma exists in the air during subsequent ionization, thereby improving the ionization efficiency and further improving the preparation efficiency of the plasma-activated water.

Specifically, the air supply assembly 52 includes an air supply pipe 521 and an air supply pump 523. One end of the air supply pipe 521 is connected with the top of the water tank 10, and the other end of the air supply pipe 521 is communicated with both the first air inlet 323 of the first substrate 321 and the second air inlet 343 of the second substrate 341. The air supply pump 523 is disposed on the air supply pipe 521 and is configured to drive a gas at the top of the multifunctional water tank 10 to flow into the first discharge cavity 322 in the first substrate 321 and the second discharge cavity 342 in the second substrate 341.

In some embodiments, the gas-liquid mixed mechanism 50 includes a liquid circulation assembly 54 and a mixing member 56. The mixing member 56 is disposed in the accommodating cavity 11 and is spaced apart from the bottom wall and the top wall of the accommodating cavity 11, to reserve space for accommodating water between the mixing member 56 and the bottom wall of the accommodating cavity 11 and reserve space for accommodating air between the mixing member 56 and the top wall of the accommodating cavity 11. The mixing member 56 allows a gas and liquid to pass through, and the liquid circulation assembly 54 is connected between the bottom and the top of the water tank 10 and is configured to transport the liquid at the bottom of the accommodating cavity 11 to the top of the accommodating cavity 11 and flow to the mixing member 56. In this way, the liquid at the bottom of the accommodating cavity 11 flows to the liquid circulation assembly 54, then flows to the top of the accommodating cavity 11, finally flows through the mixing member 56, and flows to the bottom of the accommodating cavity 11 after the liquid and gas are fully mixed in the mixing member 56. The mixing of the gas and liquid is completed in the mixing member 56, so that the gas containing plasma can be fully mixed and reacted with the liquid, improving the preparation efficiency of the plasma-activated water.

In some embodiments, the mixing member 56 includes a multi-surface hollow ball that allows the gas and liquid to pass through and be mixed with each other internally, or the mixing member 56 includes water curtain paper, which also allows the gas and liquid to pass through and be mixed with each other internally.

Specifically, the liquid circulation assembly 54 further includes a liquid circulation pipe 541, a first circulation pump 543, and a first sprayer 545. The liquid circulation pipe 541 is communicated between the bottom and the top of the accommodating cavity 11, the first circulation pump 543 is disposed on the liquid circulation pipe 541, the first sprayer 545 is connected with the liquid circulation pipe 541 and is located at the top of the accommodating cavity 11, and the electrode assembly 30 is located in a spraying range of the first sprayer 545. In this way, the liquid at the bottom of the water tank 10 flows from the liquid circulation pipe 541 to the top of the water tank 10 driven by the circulation pump, and is ejected from the first sprayer 545, so that liquid circulation is implemented, the liquid flows to the mixing member 56 and is fully mixed with the gas of the mixing member 56, to improve the preparation efficiency of the plasma-activated water. In addition, when the liquid is ejected from the first sprayer 545, the electrode assembly 30 is located in the spraying range of the first sprayer 545, can be showered by the liquid, and then the electrode assembly 30 can be cooled, preventing the electrode assembly 30 from transmitting heat to the liquid in the water tank 10 and causing the generated plasma-activated water to be decomposed because of an excessively high temperature, and ensuring that the plasma-activated water is stably accommodated in the water tank 10.

In some embodiments, the first sprayer 545 is located between the first electrode assembly 32 and the second electrode assembly 34, and liquid can be sprayed on both the first electrode assembly 32 and the second electrode assembly 34 to be cooled.

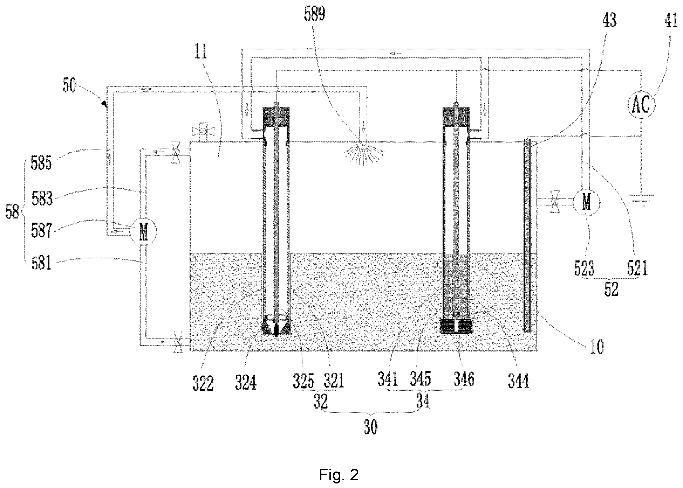

Refer to Fig. 2. In some other embodiments, the gas-liquid mixed mechanism 50 includes a gas-liquid mixed assembly 58. The gas-liquid mixed assembly 58 includes a first input pipe 581, a second input pipe 583, an output pipe 585, and a hybrid power component member 587. Ends of the first input pipe 581 and the second input pipe 583 are communicated with the top and bottom of the accommodating cavity 11 respectively, the other ends of the first input pipe 581 and the second input pipe 583 are communicated with an input side of the hybrid power component member 587, and the output pipe 585 is connected between an output side of the hybrid power component member 587 and the top of the accommodating cavity 11. Liquid at the bottom of the water tank 10 and the air at the top of the water tank 10 are sucked into the hybrid power member 587 through the first input pipe 581 and the second input pipe 583 respectively, and flow to the top of the accommodating cavity 11 through the output pipe 585 after mixed in the hybrid power component member 587, and return to the water tank 10, to fully mix the gas and the liquid during circulation, improving the preparation efficiency of the plasma-activated water.

In some embodiments, the hybrid power component member 587 is a gas-liquid mixed pump, which can suck liquid and a gas to be mixed and output.

In some embodiments, the gas-liquid mixed assembly 58 further includes a second sprayer 589, the second sprayer 589 is connected to the output pipe 585 and is located at the top of the accommodating cavity 11, and the electrode assembly 30 is located in a spraying range of the second sprayer 589. In this way, liquid mixed with a gas is output through the second sprayer 589, and liquid is sprayed to the electrode assembly 30 to cool the electrode assembly 30, preventing the electrode assembly 30 from transmitting heat to the liquid of the water tank 10 and causing the generated plasma-activated water to be decomposed because of an excessively high temperature, and ensuring that the plasma-activated water is stably placed in the water tank 10.

In some embodiments, the second sprayer 589 is located between the first electrode assembly 32 and the second electrode assembly 34, and liquid can be sprayed on both the first electrode assembly 32 and the second electrode assembly 34 to be cooled.

The technical features in the foregoing embodiments may be combined randomly. For brevity of description, not all possible combinations of the technical features in the foregoing embodiments are described. However, provided no conflict occurs when the technical features are combined, it should be considered that the technical features fall within the scope of this specification.

The foregoing embodiments merely illustrate some implementations of this application, and the description thereof is relatively specific and detailed, but should not be construed as a limitation on the patent scope of this application. It should be noted that a person of ordinary skill in the art may make some improvements and transformation without departing from the idea of this application, and the improvements and transformation shall fall within the protection scope of this application. Therefore, the protection scope of this application patent shall be subject to the attached claims.

## Claims

1. A plasma-activated water preparation device, comprising:
a water tank (10), provided with an accommodating cavity (11);
an electrode assembly (30), assembled on the water tank (10) and extending into the accommodating cavity (11) for discharging to generate plasma; and
a gas-liquid mixed mechanism (50), connected with the water tank (10),
wherein a gas and liquid in the water tank (10) circulate back and forth and are mixed with each other between the water tank (10) and the gas-liquid mixed mechanism (50) driven by the gas-liquid mixed mechanism (50).

2. The plasma-activated water preparation device according to claim 1, wherein the gas-liquid mixed mechanism (50) comprises an air supply assembly (52), the electrode assembly (30) comprises a first electrode assembly (32), the first electrode assembly (32) comprises a first substrate (321) and a first electrode (325), the first substrate (321) has a first discharge cavity (322), and the first electrode (325) at least partially extends into the first discharge cavity (322),
wherein the first substrate (321) at least partially extends into liquid carried in the accommodating cavity (11), the air supply assembly (52) is configured to supply air to the first discharge cavity (322) and causes a low liquid level to be formed at the bottom of the first substrate (321), and the first electrode (325) is controlled to produce an electric arc between an end of the first electrode (325) and the low liquid level.

3. The plasma-activated water preparation device according to claim 2, wherein the first substrate (321) is provided with a first air inlet and a first air outlet both communicated with the first discharge cavity (322), the air supply assembly (52) is configured to supply air to the first air inlet, and the first electrode (325) generates an electric arc with the low liquid level through the first air outlet.

4. The plasma-activated water preparation device according to claim 3, wherein the electrode assembly (30) comprises a second electrode assembly (34), the second electrode assembly (34) comprises a second substrate (341) and a second electrode (345), the second substrate (341) is provided with a second discharge cavity (342), and the second electrode (345) at least partially extends into the second discharge cavity (342), wherein
the second electrode (345) is controlled to perform glow discharge in the second discharge cavity (342).

5. The plasma-activated water preparation device according to claim 4, wherein the second electrode assembly (34) further comprises an aeration stone (346), a second air inlet and a second air outlet that are both communicated with the second discharge cavity (342) are provided in the second substrate (341), the air supply assembly (52) is also configured to supply air to the second air inlet, and the aeration stone (346) is mounted at the second air outlet.

6. The plasma-activated water preparation device according to any one of claims 2 to 5, wherein the air supply assembly (52) is connected between a top of the water tank (10) and the electrode assembly (30), and is configured to suck air from the accommodating cavity (11) and supply air to the electrode assembly (30).

7. The plasma-activated water preparation device according to any one of claims 2 to 5, wherein the gas-liquid mixed mechanism (50) comprises a liquid circulation assembly (54) and a mixing member (56), the mixing member (56) is disposed in the accommodating cavity (11) and is spaced apart from a bottom wall and a top wall of the accommodating cavity (11),
wherein the mixing member (56) allows a gas and liquid to pass through, and the liquid circulation assembly (54) is connected between a bottom and a top of the water tank (10) and is configured to transport the liquid at the bottom of the accommodating cavity (11) to the top of the accommodating cavity (11) and flow to the mixing member (56).

8. The plasma-activated water preparation device according to claim 7, wherein the mixing member (56) comprises a multi-surface hollow ball or water curtain paper.

9. The plasma-activated water preparation device according to claim 7, wherein the liquid circulation assembly (54) further comprises a liquid circulation pipe (541), a first circulation pump (543), and a first sprayer (545), the liquid circulation pipe (541) is communicated between the bottom and the top of the accommodating cavity (11), the first circulation pump (543) is disposed on the liquid circulation pipe (541), and the first sprayer (545) is connected with the liquid circulation pipe (541) and is located at the top of the accommodating cavity (11); and
the electrode assembly (30) is located in a spraying range of the first sprayer (545).

10. The plasma-activated water preparation device according to any one of claims 2 to 5, wherein the gas-liquid mixed mechanism (50) comprises a gas-liquid mixed assembly (58), the gas-liquid mixed assembly (58) comprises a first input pipe (581), a second input pipe (583), an output pipe (585), and a hybrid power component member (587), ends of the first input pipe (581) and the second input pipe (583) are communicated with a top and bottom of the accommodating cavity (11) respectively, the other ends of the first input pipe (581) and the second input pipe (583) are communicated with an input side of the hybrid power component member (587), and the output pipe (585) is connected between an output side of the hybrid power component member (587) and the top of the accommodating cavity (11).

11. The plasma-activated water preparation device according to claim 10, wherein the hybrid power component member (587) is a gas-liquid mixed pump.

12. The plasma-activated water preparation device according to claim 10, wherein the gas-liquid mixed assembly (58) further comprises a second sprayer (589), and the second sprayer (589) is connected with the output pipe (585) and is located at the top of the accommodating cavity (11); and
the electrode assembly (30) is located in a spraying range of the second sprayer (589).
